(19)

Europäisches
Patentamt
European
Patent Office
Office européen
des brevets

(11) **EP 3 226 230 A1**

(12) **EUROPEAN PATENT APPLICATION**

(43) Date of publication:
**04.10.2017  Bulletin 2017/40**

(51) Int Cl.:
**G09G 3/00** *(2006.01)*          **G06F 3/14** *(2006.01)*

(21) Application number: **17151902.8**

(22) Date of filing: **18.01.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.04.2016  US 201662316591 P
29.12.2016  US 201615393933**

(71) Applicant: **HTC Corporation
Taoyuan City 330 (TW)**

(72) Inventors:
• **Wan, Shiang-Ting
231 New Taipei City (TW)**
• **Choi, Iok Kan
231 New Taipei City (TW)**
• **Kuo, Hong-Ming
231 New Taipei City (TW)**

(74) Representative: **Ljungberg, Robert
Murgitroyd & Company
Scotland House
165-169 Scotland Street
Glasgow Strathclyde G5 8PL (GB)**

(54) **METHOD AND DISPLAY SYSTEM FOR ADJUSTING OUTPUT IMAGE OF DISPLAY**

(57)    A method and a display system for adjusting an output image of at least one of a first panel and a second panel are provided. The method includes obtaining a first output image for the first panel and a second output image for the second panel, determining a first calibration data applied to the first output image and not applicable to the second output image according to a first target information, and adjusting at least one of a luminance and a chromaticity of the first output image according to the first calibration data.

EP 3 226 230 A1

Printed by Jouve, 75001 PARIS (FR)

**Description**

**TECHNICAL FIELD**

The disclosure relates to a method and a display system for adjusting an output image of a display, and in particular, to a method and a display system for adjusting an output image of a display with two panels.

**BACKGROUND**

In the past years, virtual reality (VR) technology has made tremendous strides and becomes more and more popular. VR technology has been applied in various fields, such as entertainment, exercise service, medical treatment, military training, etc. According to the latest survey, there are over 20 million VR head-mounted displays (HMDs) already in use. The HMD is a display with two independent panels for displaying virtual images in front of a user's eyes. Therefore, the HMD with good performance will be a necessary factor for realizing a great VR experience.

However, it is almost impossible to find two independent panels with the same in luminance or chromaticity due to minor manufacturing variation and/or some other manufacturing issues. Such difference in luminance or chromaticity will cause eye injury or dizziness and fainting when the two panels are used in an HMD. Therefore, it is very important to solve the problem of difference in luminance or chromaticity between two independent panels of an HMD.

**SUMMARY**

One aspect of the present disclosure is related to a method for adjusting an output image of at least one of a first panel and a second panel. In accordance with one embodiment of the present disclosure, the method includes obtaining a first output image for the first panel and a second output image for the second panel, determining a first calibration data applied to the first output image and not applicable to the second output image according to a first target information, and adjusting at least one of a luminance and a chromaticity of the first output image according to the first calibration data.

Another aspect of the present disclosure is related to a display system. In accordance with one embodiment of the present disclosure, the display system includes a first panel, a second panel, a storage, and a processing device. The processing device is electrically connected to the storage, the first panel, and the second panel. The processor is configured to obtain a first output image for the first panel and a second output image for the second panel, and to determine the first calibration data applied to the first output image and not applicable to the second output image according to the first target information, and to adjust at least one of a luminance and a chromaticity of the first output image according to the first calibration data.

Another aspect of the present disclosure is related to method for adjusting an output image of at least one of a first panel and a second panel. In accordance with one embodiment of the present disclosure, the method includes measuring luminance values and color coordinates of the first panel and the second panel at different gray levels, converting the luminance values and the color coordinates measured of the first panel and the second panel to RGB values of the first panel and the second panel, and generating a first calibration data for adjusting at least one of a luminance and a chromaticity of the output image of the first panel according to the RGB values of the first panel and the second panel.

Based on the above, the problem resulting from a different in luminance or chromaticity between two independent panels can be solved by using the method and the display system.

To make the aforementioned and other features and advantages of the disclosure more comprehensible, several examples accompanied with drawings are described in detail as follows.

**BRIEF DESCRIPTION OF THE DRAWINGS**

The accompanying drawings are included to provide a further understanding of the present disclosure, and are incorporated in and constitute a part of this specification. The drawings illustrate embodiments of the present disclosure and, together with the description, serve to explain the principles of the present disclosure.

FIG. 1 is a schematic diagram showing the utilization of a processing device and an image measuring device to measure and record luminance values and color coordinates of a display at different gray levels in accordance with an exemplary embodiment of the present disclosure;
FIG. 2 is a block diagram of a display provided in accordance with an exemplary embodiment of the present disclosure;
FIG. 3 is a flowchart diagram illustrating a method for adjusting an output image of the display provided in accordance with an exemplary embodiment of the present disclosure;

FIG. 4A is a graph showing an example of the measured R gamma curves of a first panel and a second panel;
FIG. 4B is a graph showing an example of the measured G gamma curves of the first panel and the second panel;
FIG. 4C is a graph showing an example of the measured B gamma curves of the first panel and the second panel;
FIG. 5 is a block diagram of a display system provided in accordance with an exemplary embodiment of the present disclosure;
FIG. 6 is a flowchart diagram illustrating a method for adjusting an output image of the display provided in accordance with an exemplary embodiment of the present disclosure;
FIG. 7 is a flowchart diagram illustrating a method for adjusting an output image of the display provided in accordance with another exemplary embodiment of the present disclosure; and
FIG. 8 is a flowchart diagram illustrating a method for adjusting an output image of the display provided in accordance with another exemplary embodiment of the present disclosure.

## DESCRIPTION OF EXAMPLES

The aforementioned illustrations and following detailed descriptions are exemplary for the purpose of further explaining the scope of the present disclosure. Other objectives and advantages related to the present disclosure will be illustrated in the subsequent descriptions and appended drawings.

It should be understood that the usage of "first" and "second" intends to distinguish one element from another, and the element should not be limited by the term. Therefore, hereinafter a first element is interchangeable with a second element. The term "and/or" includes one and one or more of the combination in the group as described.

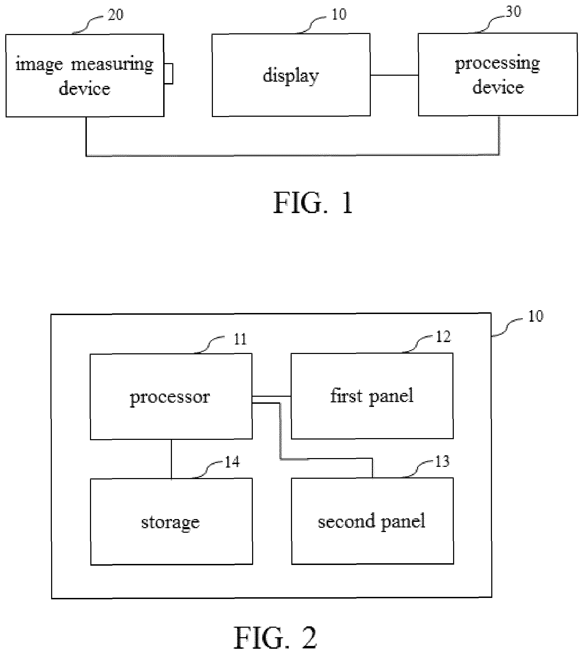

Fig. 1 is a schematic diagram showing the utilization of a processing device and an image measuring device to measure and record luminance values and color coordinates of a display at different gray levels in accordance with an exemplary embodiment of the present disclosure. A display 10 (e.g., an HMD in this embodiment, but is not limited thereto) with two panels is taken as an example. To measure the luminance or chromaticity difference between two panels, the image measuring device 20 (e.g., CCD, CMOS, or any other color analyzer) is configured to measure luminance values and color coordinates of the display 10 when the display 10 displays different white images at different gray levels. The processing device 30 is electrically connected to the display 10 and the image measuring device 20. The processing device 30 (e.g., a computer or other device with signal processing function) receives the luminance values and color coordinates measured at the display 10 through the image measuring device 20, and generates at least one calibration data for adjusting output image of at least one panels of the display 10 according to the luminance values and color coordinates received from the image measuring device 20.

FIG. 2 is a block diagram of a display provided in accordance with an exemplary embodiment of the present disclosure. The display 10 includes a processor 11, a first panel 12, a second panel 13, and a storage 14. The processor 11 is electrically connected to the first panel 12, the second panel 13, and the storage 14. The processor 11 is, for example, a central processing unit (CPU), a programmable microprocessor for general or special use, a digital signal processor (DSP), a programmable controller, an application specific integrated circuit (ASIC), a programmable logic device (PLD), other similar devices, or a combination of these devices. The first panel 12 or second panel 13 is, for example, a liquid-crystal display (LCD), a plasma display, a vacuum fluorescent display (VFD), a light-emitting diode (LED) display, a field emission display (FED), or other suitable types of displays. The storage 14 may be any type of stationary or movable random access memory (RAM), read-only memory (ROM), flash memory, similar non-transitory memory devices, or a combination thereof.

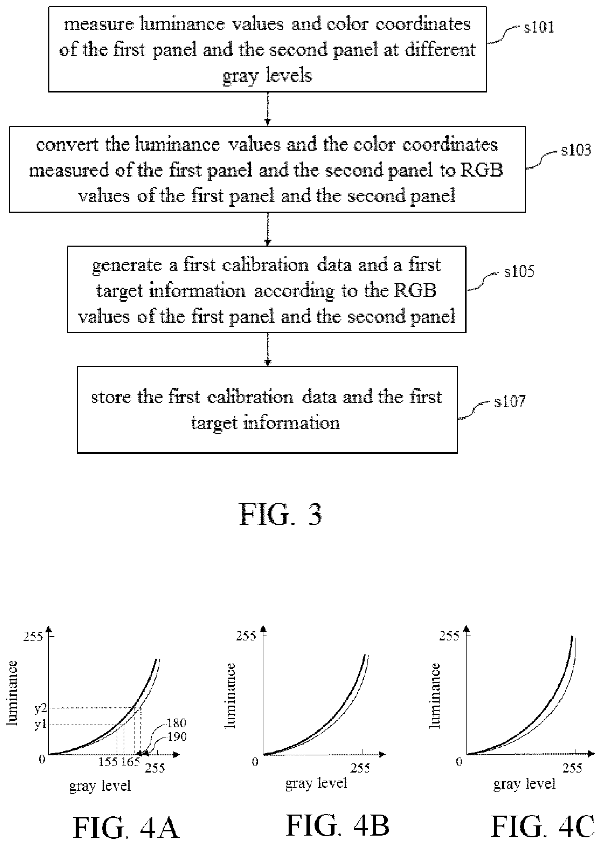

FIG. 3 is a flowchart diagram illustrating a method for adjusting an output image of the display provided in accordance with an exemplary embodiment of the present disclosure. The method of this illustrated embodiment can be applied to the display 10, the image measuring device 20, and the processing device 30 shown in FIG. 1. Steps of the method for adjusting an output image of the display in the disclosure are described in detail hereinafter.

Frist, the image measuring device 20 measures luminance values and color coordinates of the first panel 12 and the second panel 13 at different gray levels (Step S101). In an example, one or two image measuring device 20 measures luminance values (L) and color coordinates (x, y) of the first panel 12 and the second panel 13 when each of the first panel 12 and the second panel 13 displays white images from the gray level 0 to the gray level 255 (or from the gray level 0 to the gray level 1023, but is not limited thereto). In another example, one or two measuring device 20 only measures luminance values (L) and color coordinates (x, y) of the first panel 12 and the second panel 13 at some gray levels (e.g., gray level 0, 10, 50, 100, 200, and 255). In this embodiment, the image measuring device 20 measures a first partial area in the first panel 12 and a second partial area in the second panel 13 to obtain the luminance values and color coordinates of the first panel 12 and the second panel 13. The first and second partial areas can be any areas in the first panel 12 and the second panel 13. By only measuring luminance values and color coordinates of the first/second partial area (but not the whole area) in the first/second panel at different gray levels, and considering the measured values as representative luminance values and color coordinates of the whole panel at the different gray levels, this will save a lot time on generating calibration data for adjusting the luminance or/and chromaticity of the output image of the target panel. The calibration data and the target panel will be described in detail below. In another embodiment, the image measuring device 20 may measure many partial areas in the first panel 12 and the second panel 13 to obtain full luminance or/and chromatic information.

Second, the processing device 30 converts the luminance values (L) and the color coordinates (x, y) of the first panel 12 and the second panel 13 to RGB values of the first panel 12 and the second panel 13 by using a conversion formula (Step S103). In this embodiment, Equation 1 is a general conversion formula used for converting the luminance values (L) and the color coordinates (x, y) to corresponding RGB values.

$$X = x \, ( \, L/ \, y \, )$$

$$Y = L$$

$$Z = ( \, 1 - x - y \, ) \, ( \, L \, / \, y \, )$$

$$R = (3.2406 \, X \, -1.5372 \, Y \, -0.4986 \, Z) \, 255/100$$

$$G = (-0.9689X + 1.8758Y + 0.0415Z) \, 255/100$$

$$B = (0.0557X - 0.2040Y + 1.0570Z) \, 255/100 \qquad \text{[Equation 1]}$$

Here, how to use Equation 1 for converting luminance values (L) and color coordinates (x, y) to corresponding RGB values are known by a person having ordinary skill in the art, so the detail of the conversion process will not be described in the present disclosure.

Third, the processing device 30 generates a first calibration data and a first target information according to the RGB values of the first panel 12 and the second panel 13 (Step S105). Further, the processing device 30 generates RGB gamma curves of the first panel 12 and the second panel 13 according to the RGB values of the first panel 12 and the second panel 13 and compares the RGB gamma curves of the first panel 12 and the corresponding RGB gamma curves of the second panel 13 to generate the first calibration data and the first target information. An example of the RGB values of first panel 12 and the second panel 13 are shown in the Table 1 and the RGB gamma curves of the first panel 12 and the second panel 13 are respectively shown in Fig. 4A, Fig. 4B, and Fig. 4C.

Table 1

| Grey level | (R, G, B) | |
| --- | --- | --- |
| | first panel | second panel |
| L255 | (218, 234, 258) | (215, 227, 255) |
| L254 | (216,231,255) | (213, 225, 253) |
| L253 | (214,229,253) | (212, 223, 253) |
| ⋮ | ⋮ | ⋮ |
| L3 | (0.19, 0.29, 0.46) | (0.09, 0.13, 0.16) |
| L2 | (0.18, 0.26, 0.46) | (0.01, 0.11, 0.14) |
| L1 | (0.18, 0.26, 0.46) | (0.01, 0.11, 0.14) |
| L0 | (0.18, 0.26, 0.46) | (0.01, 0.11, 0.14) |

FIG. 4A is a graph showing an example of the measured R gamma curves of a first panel and a second panel. FIG. 4B is a graph showing an example of the measured G gamma curves of the first panel and the second panel. FIG. 4C is a graph showing an example of the measured B gamma curves of the first panel and the second panel. The thick lines in Fig. 4A, Fig. 4B, and Fig. 4C respectively correspond to the measured R, G, and B gamma curves of the first panel 12, and the fine lines in Fig. 4A, Fig. 4B, and Fig. 4C respectively correspond to the measured R, G, and B gamma curves of the second panel 13. In the illustrated example, the R/G/B gamma curve of the first panel 12 is closer to the vertical axis than the corresponding R/G/B gamma curve of the second panel 13, which means that the first panel 12 shows higher luminance performance relative to the second panel 13 when the first panel 12 and the second panel 13 receive the same input voltage signal (i.e., at same gray level). Accordingly, the processing device 30 determines that the first panel 12 is a target panel which needs to be adjusted and correspondingly generates the first calibration data and the first target information by comparing the RGB gamma curves of the first panel 12 and the corresponding RGB gamma curves of the second panel 13. In this embodiment, the first target information indicates that the first calibration data is applied to the output image of the first panel 12 and not applicable to the output image of the second panel 13. The first calibration data is used for adjusting the luminance of the output image of the first panel 12.

For example, as shown in Fig. 4A, the output luminance values of the first panel 12 at gray level 180 and the second panel 13 at gray level 190 are same, and the output luminance values of the first panel 12 at gray level 155 and the second panel 13 at gray level 165 are same. The processing device 30 records such relationship between the first panel 12 and the second panel 13 by comparing the R gamma curves of the first panel 12 and the second panel 13 and correspondingly generates the first calibration data (e.g., using a look-up table (LUT)). Therefore, if the second panel 13 needs to display a red image with the output luminance value y1, the processing device 30 will transmit an input voltage signal for the gray level 155 to the first panel 12 according to the LUT. If the second panel 13 needs to display a red image with the output luminance value y2, the processing device 30 will transmit an input voltage signal for the gray level 180 to the first panel 12 according to the LUT. In this way, the first panel 12 can shows the same luminance performance as the second panel 13 by receiving suitable input voltage signal.

For solving the problem of the different in luminance or/and chromaticity between the first panel 12 and the second panel 13, the processing device 30 generates the first calibration data by comparing the R gamma curves of the first panel 12 and the second panel 13, the G gamma curves of the first panel 12 and the second panel 13, and the B gamma curves of the first panel 12 and the second panel 13. Further, the processing device 30 uses interpolation method to generate more accurate calibration values based on the RGB gamma curves of the first panel 12 and the second panel 13. The interpolation method for generating more accurate calibration values based on the RGB gamma curves of the first panel 12 and the second panel 13 is known by a person having ordinary skill in the art, so the detail of the conversion method will not be described in the present disclosure. Furthermore, the at least one calibration value may not need to be generated if the difference in luminance or chromaticity between the first panel 12 and the second panel 13 is negligible. The processing device 30 determines whether to generate the at least one calibration value by comparing each R value of the first panel 12 with each corresponding R value of the second panel 13, each G value of the first panel 12 with each corresponding G value of the second panel 13, and each B value of the first panel 12 with each corresponding B value of the second panel 13. If the difference between the R/G/B value of the first panel 12 and the corresponding R/G/B value of the second panel 13 is larger than a predetermined value (e.g., 1), the processing device 30 generates the calibration value. This will save a lot time on generating the look-up table.

Finally, the processing device 30 stores the first calibration data and first target information in the storage 14 (Step S107). After that, the processor 11 transmits the first calibration data and the first target information to the same or another processing device 30 connected to the display 10, and the processing device 30 can adjust the output image of the first panel 12 according to the first calibration data and the first target information received.

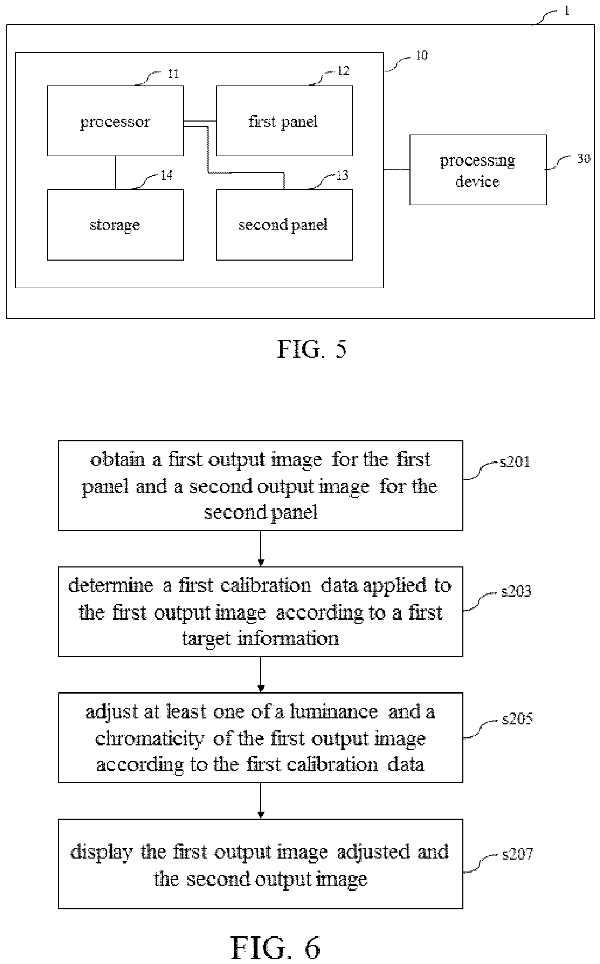

FIG. 5 is a block diagram of a display system provided in accordance with an exemplary embodiment of the present disclosure. The display system 1 includes the display 10 and the same or another processing device 30. The processing device 30 is electrically connected to the display 10. FIG. 6 is a flowchart diagram illustrating a method for adjusting an output image of the display provided in accordance with an exemplary embodiment of the present disclosure. The method of this illustrated embodiment can be applied to the display system 1 shown in FIG. 5. Steps of the method for adjusting an output image of the display in the disclosure are described in detail hereinafter.

In this embodiment, the processing device 30 obtains a first output image for the first panel 12 and a second output image for the second panel 13 (Step S201). For example, the processing device 30 can download some applications (e.g. VR, AR, MR app, or any other type app) via Internet and executes the applications to generate the first output image and the second output image. Then, the processing device 30 determines the first calibration data applied to the first output image according to the first target information (Step S203). In this embodiment, the processing device 30 obtains the first calibration data and the target information when the processing device 30 connects to the display 10 and stores the first calibration data and the target information in its memory.

Next, the processing device 30 adjusts at least one of a luminance and a chromaticity of the first output image according to the first calibration data (Step S205). After adjust the first output image, the processing device 30 transmits the adjusted first output image to the first panel 12 and directly transmits the second output image to the second panel 13 without adjusting the second output image. For example, please refer to Fig. 4A, Fig. 4B, and Fig. 4C, the processing device 30 lowers the luminance of the RGB light of the first output image according to the first calibration data, since the second panel 13 could not output the high luminance as the first panel 12 when the first panel 12 and the second panel 13 receive the same input voltage signal. Finally, the first panel 12 displays the adjusted first output image and the second panel 13 displays the second output image (Step S207) such that the adjusted first output image and the unadjusted second output image have the same luminance.

It should be noted that, in another example, the display system of the disclosure may not only adjust the output image of the first panel 12 but also the output image of the second panel 13, which is described in detail below.

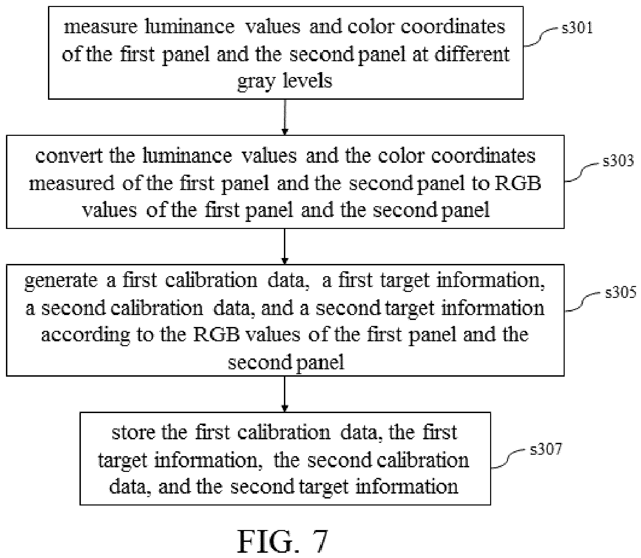

FIG. 7 is a flowchart diagram illustrating a method for adjusting an output image of the display provided in accordance with another exemplary embodiment of the present disclosure. The method of this illustrated embodiment can be applied to the display 10, the image measuring device 20, and the processing device 30 shown in FIG. 1. Steps of this method for adjusting an output image of the display in the disclosure are described in detail hereinafter.

First, the image measuring device 20 measures luminance values and color coordinates of the first panel 12 and the second panel 13 at different gray levels (Step S301). Then, the processing device 30 converts the measured luminance values and the measured color coordinates of the first panel 12 and the second panel 13 to RGB values of the first panel 12 and the second panel 13 (Step S303). Steps S301 and S303 described above are the same as or similar to Steps S101 and S103 of the above example. Thus, details thereof are not repeated hereinafter. In an example, the luminance values, the color coordinates, and the RGB values of the first panel 12 are shown in Table 2. The luminance values, the color coordinates, and the RGB values of the second panel 13 are shown in Table 3.

Table 2

| first panel | | | | | | |
|---|---|---|---|---|---|---|
| Grey level | L | x | y | R | G | B |
| L255 | 227.13 | 0.3016 | 0.3194 | 218 | 227 | 258 |
| L254 | 225.03 | 0.3016 | 0.3193 | 216 | 225 | 256 |
| L253 | 223.05 | 0.3016 | 0.3192 | 214 | 223 | 253 |

Table 3

| second panel | | | | | | |
|---|---|---|---|---|---|---|
| Grey level | L | x | y | R | G | B |
| L255 | 231.22 | 0.3017 | 0.3151 | 215 | 234 | 255 |
| L254 | 229.08 | 0.3017 | 0.3151 | 214 | 231 | 253 |
| L253 | 226.87 | 0.3017 | 0.3151 | 212 | 229 | 250 |

Then, the processing device 30 generates a first calibration data, a first target information, a second calibration data and a second target information according to the RGB values of the first panel 12 and the second panel 13 (Step S305). As shown in Table 2 and Table 3, the R and B values of the first panel 12 from the gray level 253 to the gray level 255 are larger than the corresponding R and B values of the first panel 12 from the gray level 253 to the gray level 255, but the G values of the first panel 12 from the gray level 253 to the gray level 255 are lower than the corresponding G values of the first panel 12 from the gray level 253 to the gray level 255. Accordingly, by comparing RGB gamma curves of the first panel 12 and corresponding RGB gamma curves of the second panel 13, the processing device 30 may not only generate the first calibration data and the first target information for adjusting the output image of the first panel 12, but also the second calibration data and the second target information for adjusting the output image of the second panel 13. The second target information indicates that the second calibration data are applied to the second output image and not applicable to the first output image, and the second calibration data is used for adjusting the luminance the output image of the second panel 13. Finally, the processing device 30 stores the first calibration data, the first target information, the second calibration data, and the second target information in the storage 14 (Step S307).

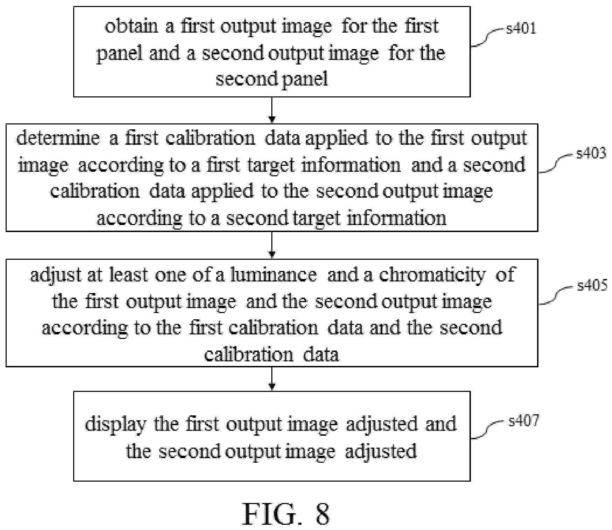

FIG. 8 is a flowchart diagram illustrating a method for adjusting an output image of the display provided in accordance with another exemplary embodiment of the present disclosure. The method of this illustrated embodiment can be applied to the display system 1 shown in FIG. 5. Steps of the method for adjusting an output image of the display in the disclosure are described in detail hereinafter.

In this embodiment, the processing device 30 obtains a first output image for the first panel 12 and a second output image for the second panel 13 (Step S401). Then, the processing device 30 determines the first calibration data applied to the first output image according to the first target information and the second calibration data applied to the second output image according to the second target information (Step S403). Steps S401 and S403 described above are the same as or similar to Steps S201 and S203 of the above example. Thus, details thereof are not repeated hereinafter.

Next, the processing device 30 adjusts at least one of a luminance and a chromaticity of the first output image and the second output image according to the first calibration data and the second calibration data (Step S405). Based on the actual measurement results, the processing device 30 may lower the luminance of the output image of the first panel 12 according to the first calibration data and increase the luminance of the output image of the second panel 13 according to the second calibration data. Or, the processing device 30 may increase the luminance of the output image of the first panel 12 according to the first calibration data and lower the luminance of the output image of the second panel 13 according to the second calibration data. Finally, the first panel 12 displays the first output image adjusted and the second panel 13 displays the second output image adjusted (Step S407).

In one embodiment, the display system 1 may not include the processing device 30, and the processor 11 will perform the same functions as the processing device 30 for adjusting the output image of the first panel 12 and/ or the second panel 13 according to at least one calibration data and at least one target information. The methods in Fig. 3, Fig. 6, Fig. 7, and Fig. 8 can be not only applied to a HMD but also a plurality of independent panels for adjusting the output images of the plurality of panels.

In view of the above illustrated embodiments, the problem resulting from the different in luminance or chromaticity between two independent panels can be solved by using the method and the display system.

It will be apparent to those skilled in the art that various modifications and variations can be made to the disclosed examples without departing from the scope or spirit of the disclosure. In view of the foregoing, it is intended that the disclosure covers modifications and variations of this disclosure provided that they fall within the scope of the following claims and their equivalents.


**Claims**

1.  A method for adjusting an output image of at least one of a first panel and a second panel, the method comprising:

    obtaining a first output image for the first panel and a second output image for the second panel;
    determining a first calibration data applied to the first output image and not applicable to the second output image according to a first target information; and
    adjusting at least one of a luminance and a chromaticity of the first output image according to the first calibration data.

2.  The method according to claim 1, wherein the first calibration data is determined by comparing RGB gamma curves of the first panel and corresponding RGB gamma curves of the second panel.

3.  The method according to claim 1, wherein the output image of the second panel is not adjusted and the method further comprises:

    displaying the first output image adjusted by the first panel; and
    displaying the second output image by the second panel.

4.  The method according to claim 2, wherein a second calibration data is determined by comparing RGB gamma curves of the first panel and corresponding RGB gamma curves of the second panel, and the method further comprising:

    determining the second calibration data applied to the second output image and not applicable to the first output image according to a second target information;
    lowering at least one of a luminance and a chromaticity of the first output image according to the first calibration data;
    increasing at least one of a luminance and a chromaticity of the second output image according to the second calibration data;
    displaying the first output image lowered by the first panel; and
    displaying the second output image increased by the second panel.

5.  A display system, comprising:

    a first panel (12), a second panel (13), a storage (14) for recording a first calibration data and a first target information; and
    a processing device coupled to the storage, the first panel and the second panel and configured to obtain a first output image for the first panel and a second output image for the second panel, and to determine the first calibration data applied to the first output image and not applicable to the second output image according to the first target information, and to adjust at least one of a luminance and a chromaticity of the first output image according to the first calibration data.

6. The display system according to claim 5, wherein the first calibration data is determined by comparing measured RGB gamma curves of the first panel and corresponding measured RGB gamma curves of the second panel.

7. The display system according to claim 5, wherein the processing device does not adjust the output image of the second panel, and the processing device is configured to transmit the first output image adjusted to the first panel and directly transmit the second output image to the second panel.

8. The display system according to claim 6, wherein the storage (14) is further configured to record a second calibration data and a second target information, and the processing device is configured to determine the second calibration data applied to the second output image and not applicable to the first output image according to the second target information, and to adjust at least one of a luminance and a chromaticity of the second output image according to the second calibration data, and to transmit the first output image adjusted to the first panel and transmit the second output image adjusted to the second panel, wherein the second calibration data is determined by comparing measured RGB gamma curves of the first panel and corresponding measured RGB gamma curves of the second panel.

9. The display system according to claim 8, wherein the processing device is configured to lower the luminance of the first output image according to the first calibration data and to increase the luminance of the second output image according to the second calibration data.

10. The display system according to anyone of the preceding claims 5 to 9, wherein the display system is a head-mounted display (HMD).

11. A method for adjusting an output image of at least one of a first panel and a second panel, independently or according to claim 1, the method comprising:

measuring luminance values and color coordinates of the first panel and the second panel at different gray levels;
converting the luminance values and the color coordinates measured of the first panel and the second panel to RGB values of the first panel and the second panel; and
generating a first calibration data for adjusting at least one of a luminance and a chromaticity of the output image of the first panel according to the RGB values of the first panel and the second panel.

12. The method according to claim 11, wherein the step of generating the first calibration data according to the RGB values of the first panel and the second panel comprises:

generating RGB gamma curves of the first panel and the second panel according to the RGB values of the first panel and the second panel; and
comparing the RGB gamma curves of the first panel and the corresponding RGB gamma curves of the second panel to generate the first calibration data.

13. The method according to claim 11 or 12, wherein the first calibration data comprises a calibration value and the method further comprise:

respectively comparing an R value, a G value and a B value in the RGB values of the first panel and a corresponding R value, a corresponding G value and a corresponding B value in the RGB values of the second panel at a gray level of the different gray levels to determining whether generating the calibration value; and
generating the calibration value in response to a determination that a difference between the R value, the G value and the B value of the first panel and the corresponding R value, the corresponding G value and the corresponding B value of the second panel is larger than a predetermined value.

14. The method according to any one of the preceding claims 11 to 13, further comprising:

generating a second calibration data for adjusting at least one of a luminance and a chromaticity of the output image of the second panel according to the RGB values of the first panel and the second panel.

15. The method according to claim 11, wherein the step of measuring the luminance values and the color coordinates of the first panel and the second panel at the different gray levels comprises:

measuring the luminance values and the color coordinates of a first partial area in the first panel and the luminance values and the color coordinates of a second partial area in the second panel at the different gray levels by an image measuring device.

FIG. 1

FIG. 2

measure luminance values and color coordinates of the first panel and the second panel at different gray levels — s101

convert the luminance values and the color coordinates measured of the first panel and the second panel to RGB values of the first panel and the second panel — s103

generate a first calibration data and a first target information according to the RGB values of the first panel and the second panel — s105

store the first calibration data and the first target information — s107

FIG. 3

luminance / gray level

255
y2
y1
0    155 165 255
180
190

gray level

FIG. 4A

luminance / gray level

255
0    255

gray level

FIG. 4B

luminance / gray level

255
0    255

gray level

FIG. 4C

FIG. 5

obtain a first output image for the first panel and a second output image for the second panel — s201

determine a first calibration data applied to the first output image according to a first target information — s203

adjust at least one of a luminance and a chromaticity of the first output image according to the first calibration data — s205

display the first output image adjusted and the second output image — s207

FIG. 6

measure luminance values and color coordinates of the first panel and the second panel at different gray levels ⌐ s301

convert the luminance values and the color coordinates measured of the first panel and the second panel to RGB values of the first panel and the second panel ⌐ s303

generate a first calibration data, a first target information, a second calibration data, and a second target information according to the RGB values of the first panel and the second panel ⌐ s305

store the first calibration data, the first target information, the second calibration data, and the second target information ⌐ s307

FIG. 7

```
┌─────────────────────────────────────────────┐
│  obtain a first output image for the first   │ ⌐ s401
│  panel and a second output image for the     │
│  second panel                                │
└─────────────────────────────────────────────┘
                      │
                      ▼
┌─────────────────────────────────────────────┐
│ determine a first calibration data applied to the first output │ ⌐ s403
│ image according to a first target information and a second     │
│ calibration data applied to the second output image           │
│ according to a second target information                      │
└─────────────────────────────────────────────┘
                      │
                      ▼
┌─────────────────────────────────────────────┐
│ adjust at least one of a luminance and a chromaticity of │ ⌐ s405
│ the first output image and the second output image       │
│ according to the first calibration data and the second   │
│ calibration data                                         │
└─────────────────────────────────────────────┘
                      │
                      ▼
┌─────────────────────────────────────────────┐
│ display the first output image adjusted and │ ⌐ s407
│ the second output image adjusted            │
└─────────────────────────────────────────────┘
```

FIG. 8

14

Europäisches
Patentamt

European
Patent Office

Office européen
des brevets

# EUROPEAN SEARCH REPORT

**Application Number**

EP 17 15 1902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/160101 A1 (CHEN CHUN-MING [TW] ET AL) 12 June 2014 (2014-06-12) * paragraphs [0004], [0010], [0012] - [0021], [0023] - [0031]; figures 2,3,4 * ----- | 1-15 | INV. G09G3/00 G06F3/14 |
| X | US 2015/242178 A1 (CHO KYUNG-SUN [KR] ET AL) 27 August 2015 (2015-08-27) * paragraphs [0007] - [0012], [0103] - [0120]; figures 7, 8a, 8b * ----- | 1-15 | |

|  |
|---|
| TECHNICAL FIELDS SEARCHED (IPC) |
| G09G G06F |

The present search report has been drawn up for all claims

| Place of search | Date of completion of the search | Examiner |
|---|---|---|
| The Hague | 23 August 2017 | Vázquez del Real, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 1902

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2017

| Patent document cited in search report | | Publication date | Patent family member(s) | | | Publication date |
|---|---|---|---|---|---|---|
| US 2014160101 | A1 | 12-06-2014 | TW | 201423721 | A | 16-06-2014 |
| | | | US | 2014160101 | A1 | 12-06-2014 |
| US 2015242178 | A1 | 27-08-2015 | CN | 104869462 | A | 26-08-2015 |
| | | | EP | 2953341 | A2 | 09-12-2015 |
| | | | JP | 2015159540 | A | 03-09-2015 |
| | | | KR | 20150100123 | A | 02-09-2015 |
| | | | US | 2015242178 | A1 | 27-08-2015 |

EPO FORM P0459

For more details about this annex : see Official Journal of the European Patent Office, No. 12/82